# EUROPEAN PATENT SPECIFICATION

(11) **EP 3 174 839 B1**
(45) Date of publication and mention of the grant of the patent: **20.04.2022**
(21) Application number: 15753221.9
(22) Date of filing: 07.07.2015
(51) Int. Cl.: C04B 41/89, F01D 5/28

(54) **ARTICLE COMPRISING ENVIRONMENTAL BARRIER COATING**
ARTIKEL MIT UMWELTSPERRSCHICHT
ARTICLE COMPRENANT UN REVÊTEMENT BARRIÈRE ENVIRONNEMENTALE

(30) Priority: 29.07.2014 US 201414445665
(43) Date of publication of application: 07.06.2017
(73) Proprietor: General Electric Company, Schenectady, NY 12345 (US)
(72) Inventor: WAN, Julin, Niskayuna, NY 12309 (US)
(74) Representative: Openshaw & Co.
(86) International application number: PCT/US2015/039331
(87) International publication number: WO 2016/018570

(56) References cited:
- EP-A2- 2 138 477
- US-A1- 2014 169 943

## Description

### BACKGROUND

This invention relates to articles comprising an environmental barrier coating (EBC), for example, high-temperature machine components. More particularly, this invention relates to coating systems and articles comprising the same for protecting machine components from exposure to high-temperature environments. This invention also relates to methods for making and protecting articles.

High-temperature materials, such as, for example, ceramics, alloys, and intermetallics, offer attractive properties for use in structures designed for service at high temperatures in such applications as gas turbine engines, heat exchangers, and internal combustion engines, for example. However, the environments characteristic of these applications often contain reactive species, such as water vapor, which at high temperatures may cause significant degradation of the material structure. For example, water vapor has been shown to cause significant surface recession and mass loss in silicon-bearing materials. The water vapor reacts with the structural material at high temperatures to form volatile silicon-containing species, often resulting in unacceptably high recession rates.

Environmental barrier coatings (EBC's) are applied to silicon-bearing materials and other material susceptible to attack by reactive species, such as high temperature water vapor. EBC's provide protection by prohibiting contact between the environment and the surface of the material. EBC's applied to silicon-bearing materials, for example, are designed to be relatively stable chemically in high-temperature, water vapor-containing environments. One exemplary conventional EBC system, as described in U.S. Pat. No. 6,410,148, comprises a silicon or silica bond layer applied to a silicon-bearing substrate; an intermediate layer comprising mullite or a mullite-alkaline earth aluminosilicate mixture deposited over the bond layer; and a top layer comprising an alkaline earth aluminosilicate deposited over the intermediate layer. In another example, U.S. Pat. No. 6,296,941, the top layer is a yttrium silicate layer rather than an alumino silicate. U.S. Pat. No. 6,299,988 and U.S. Publication No. 2011/0052925 also describe EBC's. EP 2 138 477 A relates to protective coating systems including porous coatings.

### BRIEF DESCRIPTION

The above coating systems can provide suitable protection for articles in demanding environments, but opportunities for improvement in coating performance exist. Implementation of different materials in EBC's offers an opportunity for use in an expanded array of applications and environments, yet use of different materials can also result in new technical problems that can detrimentally impact the integrity of an EBC and/or the article comprising the EBC.

Therefore, there is a need for articles protected by improved coating systems that offer utility in expanded applications, without sacrificing the integrity of the EBC and/or the article. There is also a further need for methods to produce these articles economically and reproducibly.

In one aspect, the invention provides an article as defined in claim 1.

In a second aspect, the invention provides a method, as defined in claim 6, for making an article.

In some embodiments, the method further comprises: disposing an intermediate layer over the porous transition layer, the intermediate layer comprising a barrier material that is substantially inert with respect to silica; and optionally disposing a topcoat over the sealing layer.

### DRAWINGS

These and other features, aspects, and advantages of the present invention will become better understood when the following detailed description is read with reference to the accompanying drawings in which like characters represent like parts throughout the drawings, wherein:
FIG. 1 is a schematic cross-section illustration of one exemplary embodiment of the present invention.
FIG. 2 is a simplified schematic cross-section illustration of another exemplary embodiment of the present invention.

### DETAILED DESCRIPTION

As used herein, the substantially hermetic sealing layer, which may be referred to herein as a "sealing layer," refers to a layer/coating, or multiple layers/ coatings, that can prevent gases in the environment from accessing the substrate from the coated side. The term "substantially hermetic" as used herein means that the coating has a gas permeability that is below about 2 × 10⁻¹⁴ cm² (about 2 × 10⁻⁶ Darcy), the detection limit of commonly used measurement techniques. In some non-limiting embodiments, the sealing layer comprises material ("sealing material") capable of forming a flowable phase, such as a liquid or a glassy phase, at or above a known temperature ("sealing temperature") that is below a melting temperature of the bulk of the coating. This liquid or glassy phase has a viscosity at the sealing temperature suitable to allow the flowable phase to flow into and at least partially fill defects such as cracks and pores, thereby enhancing the ability of the coating to block the movement of detrimental species from the external environment into the substrate. Examples of non-limiting sealing layers that may be used in the present invention are described, for example, in U.S. Publication No. 2011/0052925.

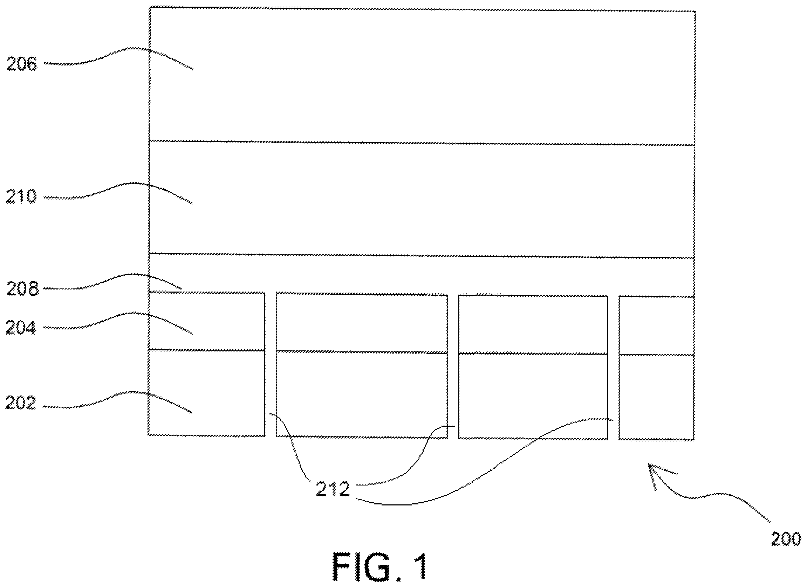

FIG. 1 depicts an exemplary article 200 of the present invention. In this particular embodiment, sealing layer 210 is disposed over a substrate 202. In some embodiments the substrate comprises an oxide, nitride, or carbide. Substrate 202 may include a silicon-containing material, such as silicon nitride, molybdenum disilicide, or silicon carbide. The substrate comprises a ceramic-matrix composite material, such as a material made of a matrix phase and a reinforcement phase; in particular embodiments, the matrix phase and the reinforcement phase comprise silicon carbide (SiC). In certain embodiments, article 200 is a component of a gas turbine assembly, such as, for example, a combustion liner, transition piece, shroud, vane, or blade. In some embodiments, the ability of the sealing layer to protect substrate 202 from exposure to water vapor at high temperatures may be advantageous for its application to silicon-bearing turbine components. It will be understood that although the application of embodiments of the present invention may be described with reference to applications on silicon-bearing substrates for protection against attack by water vapor, such references are exemplary and that embodiments of the present invention include substrate materials other than silicon-bearing materials.

In some embodiments, a bondcoat 204 is disposed over substrate 202, between the sealing layer 210 and the substrate 202. Bondcoat 204 may be used, for example, to mitigate thermal stresses or to inhibit chemical reactions between, e.g., substrate 202 and sealing layer 210. In some embodiments, bondcoat 204 is a nonoxide layer that serves as an oxygen getter that inhibits and/or prevents oxidation of the substrate.

In some embodiments, such as, for example, where substrate 202 is a silicon-bearing material, the bondcoat 204 may comprise silicon. For example, bondcoat 204, in some embodiments, comprises elemental silicon or a silicide. In some embodiments, bondcoat 204 comprises silicon carbide and/or silicon nitride. In some embodiments, bond coat 204 comprises a carbide, nitride, and /or silicide.

In various applications, articles (e.g., articles comprising environmental barrier coatings (EBCs)) for substrates (e.g., silicon carbide-based ceramic matrix composites) employ silicon as the bondcoat (i.e., a silicon bond coat). However, this can limit the temperature application of, e.g., an EBC/CMC system to below the melting point of silicon. Accordingly, in some embodiments, the bondcoat comprises a material that is more refractory than silicon. Such embodiments offer utility in that they allow articles (e.g., turbines that use ceramic matrix composites (CMCs) on, e.g., hot-section parts), to benefit from a higher firing temperature.

Many potential options for a refractory bondcoat generate a gaseous reaction product upon oxidation. For example, carbides oxidize to release carbon monoxide or carbon dioxide, nitrides oxidize to release nitrogen gas, and some silicides oxidize to release metal oxides that may, in some cases, be in a gaseous state. These gaseous reaction products cause spallation in traditional EBC's because they include a hermetic layer and therefore do not permit permeation of these gaseous products. As a result, gas bubbles build up underneath the hermetic layer(s), which, overtime, lead to spallation of the EBC. Thus, while expanded, non-silicon bond coats offer advantages such as expanded temperature applications, they can also introduce new problems, such as potential article spallation due to gas bubbles caused by gaseous reactant products, thereby necessitating new EBC/CMC design.

The present invention addresses, *inter alia,* the problem of spallation due to bubbles caused by gaseous reactant products via the inclusion of porous transition layer 208, which is disposed on substrate 202 between the sealing layer 210 and the substrate 202, and by inclusion of one or more openings 212 extending through the substrate 202 to the porous transition layer 208. As shown in the embodiment depicted in FIG. 1, where bondcoat 204 is present, the one or more openings 212 also extend through the bondcoat.

The porosity of porous transition layer 208 allows for redistribution of gaseous reaction product. The porous transition layer comprises an oxide or non-oxide ceramic or a combination thereof, which is thermally and chemically compatible with the substrate and the sealing layer. For example, in the case that the substrate is composed of silicon carbide based CMC, and the component within the sealing layer right next to the porous layer is composed of rare earth silicate, the porous layer in some embodiment can be a rare earth silicate. In another embodiment it can be silicon carbide. Persons having ordinary skill in the art will readily recognize that the desired porosity of the porous transition layer may change depending on the intended application of the inventive article, and the on the nature of the other materials used in the article (e.g., on the nature of the bond coat, where present). While the porous transition layer may have any porosity that effectuates the intended purpose of the layer, in some embodiments, the porous transition layer has a porosity of 10 to 90% (e.g., 10, 15, 20, 25, 30, 35, 40, 45, 50, 55, 60, 65, 70, 75, 80, 85, or 90%), including any and all ranges and subranges therein (e.g., 15-85%, 12-75%, etc.), preferably 20-50%. In some embodiments, the porous transition layer will have a specified, and optionally pre-determined average pore diameter, which again, may vary depending on application and nature of the inventive article. In some embodiments, the porous transition layer has an average pore diameter of 0.1 to 100 µm (e.g., 0.1, 0.2, 0.3, 0.4, 0.5, 0.6, 0.7, 0.8, 0.9, 1, 2, 3, 4, 5, 10, 15, 20, 25, 30, 35, 40, 45, 50, 55, 60, 65, 70, 75, 80, 85, 90, 95, or 100 µm), including any and all ranges and subranges therein (e.g., 0.1 to 20 µm, 0.1 to 15 µm, etc.).

The chemical composition and physical features of the porous layer described as above are subject to change during the service of the article, and thereby may drift out of the ranges specified above. For example, sintering and coarsening may occur which lead to reduced porosity and increased pore diameter. In the case that silicon carbide is used to form the porous layer, oxidation will turn this layer into a silica based layer partially or entirely. The material that is used to make the porous layer can be applied in its pure form, or in mixture with a second phase or as an alloy with a minor dopant, to enhance the property of the layer according to specific application requirements.

Article 200 includes openings 212, which extend through the substrate 202 to the porous transition layer 208. The openings 212 serve as escape holes for gaseous species, which are first redistributed through porous transition layer 208. The openings 212 may be created in any desired or art/acceptable fashion. For example, in some embodiments, the openings 212 are created by drilling through the layer(s) preceding the porous transition layer 208 (e.g., drilling through substrate 202 and bond coat 204). In some embodiments, the openings 212 extend into the porous transition layer 208. The one or more openings 212 may have equivalent or differing diameters, and diameters may be selected depending on the nature and application of the article. In some embodiments, the one or more openings have an average diameter of 1 to 1000 µm (e.g., 1, 2, 3, 4, 5, 6, 7, 8, 9, 10, 20, 30, 40, 50, 60, 70, 80, 90, 100, 200, 300, 400, 500, 600, 700, 800, 900, or 1000 µm), including any and all ranges and subranges therein (e.g., 1-20 µm, 2 to 40 µm, etc.). While reference is made above to an average diameter, the cross section of the opening can be of any shape, including but not limited to circular, oval, square, rectangular, triangular, or any other regular or irregular geometry. The spacing between the openings can be periodical or random, and can range from 10 µm to 100 mm, depending on the application requirements. Longitudinally the openings can be straight or tortuous through the substrate and the coating layers.

Upon, for example, oxidation of the bond coat, gaseous product is conducted through the porous transition layer 208 to the openings 212, from which the gaseous product escapes.

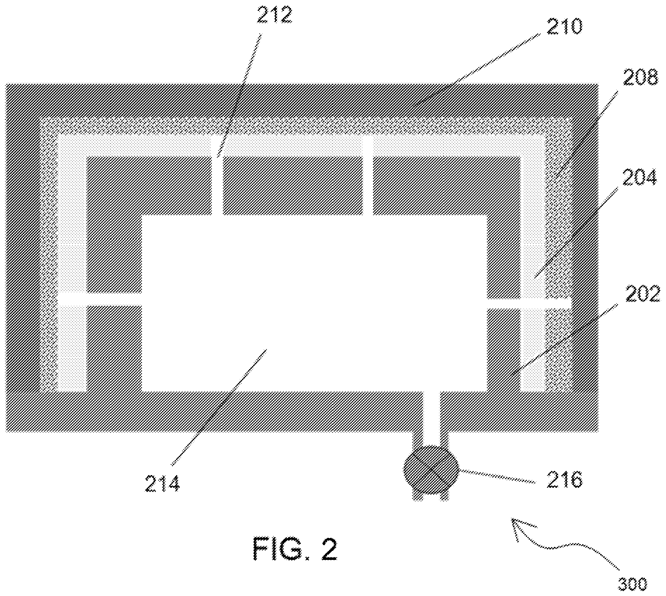

FIG. 2 depicts another exemplary article 300 of the present invention. In this particular embodiment, the article comprises a substrate cavity 214, and the openings 212 enter into the cavity 214. In some embodiments (not pictured), the cavity 214 is an open chamber that is optionally in pressure equilibrium with the external environment (e.g., combustion environment), and may optionally be protected by a flux of dry air. In other embodiments (e.g., in the embodiment depicted in FIG. 2), the cavity 214 is a self-contained closed chamber that is isolated from the external (e.g., combustion) environment. In such embodiments, upon long term use, gas-generating reactions (e.g., oxidation) can cause gas pressure buildup within the cavity 214, which could rise to levels that could threaten article and/or EBC integrity. In such cases, periodical venting of gas from the cavity 214 is desirable, and may be accomplished through optional vent 216. In some embodiments, vent 216 is a controlled valve, or a thermal-expansion enabled seal that can close at high temperatures and open at low temperatures, such that, for example, pressure inside the cavity 214 may be released during a service cycle.

In some embodiments, an intermediate layer (not shown) may be disposed between sealing layer 210 and bond coat 204 (e.g., between the sealing layer 210 and the porous transition layer 208, or between the porous transition layer 208 and the bondcoat 204). In some embodiments, the bond coat 204 comprises silicon or silicon oxide, and the intermediate layer comprises a barrier material that is substantially inert with respect to silicon oxide to promote chemical stability in the coating system. "Substantially inert" means that there is at most only incidental interaction (solubility or reactivity) between silica and the barrier material. Rare-earth disilicates, such as disilicates of yttrium, ytterbium, lutetium, scandium, and other rare-earth elements, are non-limiting examples of suitable barrier materials.

As shown in FIG. 1, in some embodiments, a topcoat 206 is disposed over sealing layer 210. Topcoat 206 may be used to provide thermal insulation (a thermal barrier coating), environmental protection (an environmental barrier coating), or a combination of these functions. The selection of a suitable topcoat material will depend on the type of environment the article is to be exposed to, the composition of the underlying coatings and substrate, the cost of processing, and other factors known in the art. In some embodiments, topcoat 206 is a ceramic material. Many classes of ceramic materials may serve as thermal and/or environmental barrier coatings; these materials include, but are not limited to, silicates, aluminosilicates, and yttria-stabilized zirconia. In certain embodiments, topcoat 206 contains a rare earth monosilicate and/or rare earth disilicate; in particular embodiments, topcoat 206 is a dual-layer coating, with an outer layer of rare earth monosilicate and an inner layer of rare earth disilicate. The rare earth elements associated with these monosilicate and disilicate materials, in some embodiments, may include one or more of yttrium, ytterbium, lutetium, and scandium. A particular example is where the outer layer is yttrium monosilicate and the inner layer is a rare earth disilicate (such as yttrium disilicate, for instance).

The thickness of any of the various coating layers described above is generally chosen to provide adequate protection for a given service time while keeping thermal stresses to a sustainable level. Moreover, coating thickness may also be determined by the ability of a selected coating method to produce a continuous layer over the deposition area. Non-limiting examples of approximate thickness ranges for the various coatings include the following: for the sealing layer, from about 25 micrometers to about 1000 micrometers; for the porous transition layer, from about 25 micrometers to about 1000 micrometers; for the bondcoat, from about 25 micrometers to about 200 micrometers; for the intermediate layer, from about 50 micrometers to about 100 micrometers; for the topcoat layer, from about 50 micrometers to about 500 micrometers. For the dual-layer topcoat embodiment described above, the yttrium monosilcate outer layer can be from about 25 micrometers to about 50 micrometers in certain embodiments.

The coatings described above can be deposited using coating technology that may result in a substantial amount of cracking and internal open porosity. Plasma spray technology and slurry-based coating processes are examples of coating methods that generate coatings with such features. In such cases, the presence of the sealing layer serves to considerably enhance the hermeticity, and thus the efficacy of protection, of the coating. Moreover, in some embodiments the sealing layer may be effective in sealing cracks or other damage to the coating that may occur after processing, including for instance damage created during installation of components, or service of components.

In order to activate the optional self-sealing nature of the sealing layer, the sealing layer may be heated to the sealing temperature (described above) at which at least a portion of the sealing layer will flow; the flowable portion thus moves into cracks and pores and, upon solidification, seals off these defects that would otherwise serve as pathways for detrimental species, such as water vapor, from the environment to the substrate. Depending upon the nature of the coating, the economics of the processing, and other factors, the heating step may be performed immediately after depositing the sealing layer, after all coatings have been deposited but prior to putting the finished article into service, or even during service itself if the service temperature is allowed to be sufficiently high.

The sealing temperature is maintained for an effective time to allow time for the flowable material to reach and at least partially fill or otherwise seal off the defects. The length of time needed to achieve this is generally selected based on the number and nature of the defects to be sealed and the quantity of flowable material available in the sealing layer. In one embodiment, the sealing layer is heated to a sealing temperature in a range from about 950 degrees Celsius to about 1350 degrees Celsius for a time in the range from about 30 minutes to about 10 hours; in particular embodiments the time is in the range from about 30 minutes to about 4 hours. In some embodiments, the temperature is in the range from about 950 degrees Celsius to about 1050 degrees Celsius for a time in the range from about 30 minutes to about 4 hours, while in other embodiments the temperature is from about 1250 degrees Celsius to about 1350 degrees Celsius for a time in the range from about 30 minutes to about 4 hours. The heating step to seal the coating may be performed in air, vacuum, an inert atmosphere, or other environment, depending at least in part on the requirements of the materials being heated (i.e., the substrate and other coating layers, if present).

The method that is applied to deposit the porous layer is selected to fulfill the geometric requirements as described above. In some embodiments, the layer is applied by thermal spray with parameters selected to target a specific porosity, such as controlling the spray gun energy, standoff distance, and particle size of the powder feed. In other embodiments, a sacrificial phase is added to the powder feed to enhance the porosity. For example, organic particles such as but not limited to polystyrene particles, are added to the powder feed during the coating process, which can be burned off during subsequent steps and leave behind pores in the coating. In another example, a dissolvable salt is added and subsequently dissolved away to generate the pores. In yet another example, glass particles are added to the powder feed, after applying the layer, the glass phase is leached away by soaking the part in a hydrofluoric acid solution to leave behind a porous structure. In yet another example, a glass layer is deposited and then a subsequent heat-treatments is applied to lead to partial crystallization or phase separation of the glass, subsequently the coating is soaked in an acid solution to leach out one phase and leave behind a porous structure.

Similar technology can be applied in slurry coating, wherein either controlling parameters to facilitate partial sintering, or otherwise employment of a sacrificial phase can be used to achieve a structure that contain appropriate porosity. Partial sintering can be realized by solid phase or liquid sintering of coarse particle compact at lower temperatures, or use a bonding agent to facilitate necking with minimal volume shrinkage, or sintering of a multimodal powder mixture. Sacrificial phases, as stated above, can be an organic or carbonaceous phase, or a dissolvable salt or a glass phase that can be etched away. In general, any technologies known by those skilled in the art of making porous ceramics can be applied in this invention.

Where one or more ranges are referred to throughout this specification, each range is intended to be a shorthand format for presenting information, where the range is understood to encompass each discrete point within the range as if the same were fully set forth herein.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments without departing from their scope. While the dimensions and types of materials described herein are intended to define the parameters of the various embodiments, they are by no means limiting and are merely exemplary. Many other embodiments will be apparent to those of skill in the art upon reviewing the above description. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the disclosure may include only some of the described embodiments. Accordingly, the invention is not to be seen as limited by the foregoing description, but is only limited by the scope of the appended claims.

## Claims

1. An article comprising:
- a substrate;
- a substantially hermetic sealing layer disposed on the substrate, the substantially hermetic sealing layer having a gas permeability that is below 2 × 10⁻¹⁴ cm² (2 × 10⁻⁶ Darcy); and
- a porous transition layer disposed on the substrate between the sealing layer and the substrate,
- a bondcoat disposed on the substrate, wherein the porous transition layer is disposed between the sealing layer and the bondcoat;
wherein the article comprises one or more openings extending through the substrate to the porous transition layer, and wherein the substrate comprises a ceramic matrix composite material.

2. The article according to claim 1, wherein the substrate comprises silicon carbide (SiC).

3. The article according to claim 1, wherein the composite comprises a matrix phase and a reinforcement phase, and wherein the matrix phase and the reinforcement phase comprise silicon carbide.

4. The article according to claim 1, wherein the bondcoat comprises silicon carbide and/or silicon nitride.

5. The article according to claim 1, when the substrate is composed of silicon carbide based ceramic matrix composite material, the sealing layer is composed of rare earth silicate, and wherein the porous transition layer is a rare earth silicate or silicon carbide.

6. A method for making an article, said method comprising:
- disposing a bondcoat over a substrate, the substrate comprising a ceramic matrix composite material;
- disposing a porous transition layer over the bondcoat;
- disposing a sealing layer over the porous transition layer, wherein the sealing layer comprises a rare earth silicate or an alkaline-earth aluminosilicate; and
- forming one or more openings, said openings extending through the substrate and bondcoat to the porous transition layer.

7. The method according to claim 6, wherein the bondcoat comprises silicon or silicon oxide, said method further comprising:
- disposing an intermediate layer over the porous transition layer, said intermediate layer comprising a rare earth disilicate barrier material; and
- disposing a topcoat over the sealing layer.

## Patentansprüche

1. Erzeugnis, das Folgendes umfasst:
- ein Substrat;
- eine im Wesentlichen hermetische Versiegelungsschicht, die auf dem Substrat angeordnet ist, wobei die im Wesentlichen hermetische Versiegelungsschicht eine Gasdurchlässigkeit aufweist, die unter 2 × 10⁻¹⁴ cm² (2 × 10⁻⁶ Darcy) liegt; und
- eine poröse Übergangsschicht, die auf dem Substrat zwischen der Versiegelungsschicht und dem Substrat angeordnet ist,
- eine Bindungsbeschichtung, die auf dem Substrat angeordnet ist, wobei die poröse Übergangsschicht zwischen der Versiegelungsschicht und der Bindungsbeschichtung angeordnet ist;
wobei das Erzeugnis eine oder mehrere Öffnungen umfasst, die sich durch das Substrat hindurch zu der porösen Übergangsschicht erstrecken, und wobei das Substrat einen Keramikmatrix-Verbundwerkstoff umfasst.

2. Erzeugnis nach Anspruch 1, wobei das Substrat Siliciumcarbid (SiC) umfasst.

3. Erzeugnis nach Anspruch 1, wobei der Verbundwerkstoff eine Matrixphase und eine Verstärkungsphase umfasst und wobei die Matrixphase und die Verstärkungsphase Siliciumcarbid umfassen.

4. Erzeugnis nach Anspruch 1, wobei die Bindungsbeschichtung Siliciumcarbid und/oder Siliciumnitrid umfasst.

5. Erzeugnis nach Anspruch 1, wenn das Substrat aus einem Keramikmatrix-Verbundwerkstoffmaterial auf Siliciumcarbidbasis besteht, die Versiegelungsschicht aus Seltenerdsilicat besteht und wobei die poröse Übergangsschicht ein Seltenerdsilicat oder Siliciumcarbid ist.

6. Verfahren zum Herstellen eines Erzeugnisses, wobei das Verfahren Folgendes umfasst:
- Anordnen einer Bindungsbeschichtung über einem Substrat, wobei das Substrat einen Keramikmatrix-Verbundwerkstoff umfasst;
- Anordnen einer porösen Übergangsschicht über der Bindungsbeschichtung;
- Anordnen einer Versiegelungsschicht über der porösen Übergangsschicht, wobei die Versiegelungsschicht ein Seltenerdsilicat oder ein Erdalkali-Aluminosilicat umfasst; und
- Ausbilden einer oder mehrerer Öffnungen, wobei sich die Öffnungen durch das Substrat und die Bindungsbeschichtung hindurch bis zu der porösen Übergangsschicht erstrecken.

7. Verfahren nach Anspruch 6, wobei die Bindungsbeschichtung Silicium oder Siliciumoxid umfasst, wobei das Verfahren ferner Folgendes umfasst:
- Anordnen einer Zwischenschicht über der porösen Übergangsschicht, wobei die Zwischenschicht ein Seltenerddisilicatbarrierematerial umfasst; und
- Anordnen einer Deckschicht über der Versiegelungsschicht.

## Revendications

1. Article comprenant :
- un substrat ;
- une couche d'étanchéité sensiblement hermétique disposée sur le substrat, la couche d'étanchéité sensiblement hermétique ayant une perméabilité aux gaz qui est inférieure à 2 × 10⁻¹⁴ cm² (2 × 10⁻⁶ Darcy) ; et
- une couche de transition poreuse disposée sur le substrat entre la couche d'étanchéité et le substrat,
- une couche de liaison disposée sur le substrat, la couche de transition poreuse étant disposée entre la couche d'étanchéité et la couche de liaison ;
l'article comprenant une ou plusieurs ouvertures s'étendant à travers le substrat jusqu'à la couche de transition poreuse, et le substrat comprenant un matériau composite à matrice céramique.

2. Article selon la revendication 1, dans lequel le substrat comprend du carbure de silicium (SiC).

3. Article selon la revendication 1, dans lequel le composite comprend une phase de matrice et une phase de renforcement, et la phase de matrice et la phase de renforcement comprenant du carbure de silicium.

4. Article selon la revendication 1, dans lequel la couche de liaison comprend du carbure de silicium et/ou du nitrure de silicium.

5. Article selon la revendication 1, lorsque le substrat est composé d'un matériau composite à matrice céramique à base de carbure de silicium, la couche d'étanchéité est composée de silicate de terre rare, et la couche de transition poreuse étant un silicate de terre rare ou du carbure de silicium.

6. Procédé de fabrication d'un article, ledit procédé comprenant :
- le dépôt d'une couche de liaison sur un substrat, le substrat comprenant un matériau composite à matrice céramique ;
- le dépôt d'une couche de transition poreuse sur la couche de liaison ;
- le dépôt d'une couche d'étanchéité sur la couche de transition poreuse, la couche d'étanchéité comprenant un silicate de terre rare ou un aluminosilicate alcalino-terreux ; et
- la formation d'une ou plusieurs ouvertures, lesdites ouvertures s'étendant à travers le substrat et la couche de liaison à la couche de transition poreuse.

7. Procédé selon la revendication 6, dans lequel la couche de liaison comprend du silicium ou de l'oxyde de silicium, ledit procédé comprenant en outre :
- le dépôt d'une couche intermédiaire sur la couche de transition poreuse, ladite couche intermédiaire comprenant un matériau barrière de disilicate de terre rare ; et
- le dépôt d'une couche de finition sur la couche d'étanchéité.
